# EUROPÄISCHE PATENTSCHRIFT

(11) **EP 2 824 753 B1**
(45) Veröffentlichungstag und Bekanntmachung des Hinweises auf die Patenterteilung: **17.01.2018**
(21) Anmeldenummer: 14176503.2
(22) Anmeldetag: 10.07.2014
(51) Int. Cl.: H01M 10/44, H01M 10/48, H02J 7/04, H01M 10/42, H02J 7/00

(54) **Verfahren zum Laden einer Batterie**
Method for charging a battery
Procédé de charge de batterie

(30) Priorität: 11.07.2013 DE 102013011593
(43) Veröffentlichungstag der Anmeldung: 14.01.2015
(73) Patentinhaber: Jungheinrich Aktiengesellschaft, 22047 Hamburg (DE)
(72) Erfinder: Herrmann, Julia, 22297 Hamburg (DE); Kautsky, Adrian, 22457 Hamburg (DE); Vahldiek, Dietrich, 24558 Henstedt-Ulzburg (DE); Fischer, Christian, 25489 Haseldorf (DE); von Thienen, Nils, 22305 Hamburg (DE)
(74) Vertreter: Hauck Patentanwaltspartnerschaft mbB

(56) Entgegenhaltungen:
- EP-A2- 1 039 613
- US-A1- 2008 164 849
- US-A1- 2009 085 527

## Beschreibung

Die vorliegende Erfindung betrifft ein Verfahren zum Laden einer Batterie, die mehrere Batteriestacks aufweist, von denen jeder mehrere Batteriezellen besitzt.

Es ist bekannt, in einem Ladegerät eine feste Ladekennlinie für die Batterie zu hinterlegen. Die Ladekennlinie wird von dem Ladegerät abgefahren, sobald der Ladevorgang gestartet wurde. Bei Lithium-Ionen-Batterien besitzt die typische Ladekennlinie stets eine Ladephase, in der mit einem konstanten oder annähernd konstantem Strom geladen wird. An die Ladephase schließt sich eine Nachladephase an, bei der mit konstanter Spannung geladen wird.

Ferner ist bekannt, über ein Batteriemanagementsystem spezifische Batteriedaten, wie beispielsweise Temperatur und Batteriespannung zu erfassen. Auch kann der aktuelle Ladezustand der Batterie oder einzelner Batteriestacks durch eine Messung der Ruhespannung und durch Integration des Stroms über die Ladezeit bestimmt werden.

Aus DE 20 2010 013 724 U1 ist eine Batteriepack für Elektrofahrzeuge, insbesondere für Flurförderzeuge bekannt geworden. Das Batteriepack umfasst mindestens ein Batteriemodul mit jeweils einem zur Aufnahme einer Vielzahl von Batteriezellen geeigneten Gehäuse. Das oder die Batteriemodule sind jeweils mit einer Batteriemanagementeinrichtung ausgestattet, die in der Lage ist, eine Vielzahl von Batteriezellen in dem Batteriemodul anzusteuern und/oder zu überwachen. Ferner ist vorgesehen, dass die Batteriemanagementeinrichtungen für eine Datenübertragung mit einem externen Ladegerät verbunden werden können, um abhängig von Zustandsdaten der einzelnen Batteriezellen und/oder von sonstigen Kenngrößen die Batteriezellen entsprechend zu laden.

Aus DE 10 2012 003 046 A1 ist ein Verfahren zum Laden einer Traktionsbatterie bekannt geworden, bei dem die Traktionsbatterie in einem oder in mehreren Schritten bis zu einem vorgegebenen Ladezustand geladen wird, wobei der vorgegebene Ladezustand abhängig von Kenngrößen der Umgebungsbedingungen und/oder Kenngrößen zu einem zurückliegenden Benutzerverhalten ist.

Aus DE 11 2010 002 716 T5 ist eine Ladezustandsschätzeinrichtung für eine Batterie bekannt geworden. Bei der bekannten Ladezustandschätzeinrichtung wird zu Beginn des Ladevorgangs ein erster Ladezustand geschätzt. Der seit dem Beginn des Ladevorgangs geflossene Ladestrom wird bis zum Abschluss des Ladevorgangs über die Zeit aufintegriert. Weiterhin wird der Ladezustand bei Beenden des Ladevorgangs geschätzt, wobei aus den beiden geschätzten Ladezuständen unter Hinzunahme des geflossenen Ladestroms eine obere Grenze des Ladezustands abgeschätzt wird.

Aus DE 10 2011 104 320 A1 ist eine adaptive Batterieparameterextraktion und SOC-Abschätzung für eine Lithium-Ionen-Batterie bekannt geworden. Bei dem bekannten Verfahren erfolgt eine Abschätzung der Batterieruhespannung, des Ohm'schen Widerstandes, eines Ladungstransferwiderstandes sowie weiterer physikalischer Parameter der Batterie, die es erlauben, aus den aktuell gemessenen Werten für die Batteriespannung und den Batteriestrom den aktuellen Ladezustand der Batterie und die Batterieleistung zu bestimmen.

Aus US 2009/0085527 A1 ist ein Ladeverfahren für eine Batterie bekannt, bei dem innerhalb eines vorbestimmten Temperaturbereichs ein Laden der Batterie erfolgt. Innerhalb dieses Temperaturbereichs ist ein Hochtemperatur- und ein Niedrigtemperatur-Bereich definiert, in denen jeweils mit einem anderen Ladestrom bzw. einer anderen Ladespannung die Batterie geladen wird.

Allgemein wird bei Batterien, die in Flurförderzeugen eingesetzt werden, ein schneller Ladevorgang der Batterie angestrebt, damit das Flurförderzeug bzw. dessen Batterie schnell wieder eingesetzt werden kann. Andererseits darf der Ladestrom nicht zu hoch sein, um eine Schädigung der Batterie zu vermeiden. Insbesondere bei Lithium-Ionen-Batterien ist der maximal zulässige Strom stark von
der Temperatur und dem Ladezustand abhängig, wobei hohe Ströme bei niedrigen Temperaturen zu Lithium-Plating und damit zum Kurzschluss führen können.

Der Erfindung liegt die Aufgabe zugrunde, ein Verfahren zum Laden einer Batterie bereitzustellen, das zu hohe Ladeströme an der Batterie vermeidet.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren ist vorgesehen und bestimmt zum Laden einer Batterie, die mehrere Batteriestacks aufweist, von denen jeder mehrere Batteriezellen besitzt. Bevorzugt sind die Batteriezellen in einem Stack seriell verschaltet, um die gewünschte Batteriespannung zu erreichen. In der Batterie sind die Stacks bevorzugt parallel verschaltet, um die gewünschte Kapazität der Gesamtbatterie zu erzielen. Jedem Batteriestack ist ein Batteriemanagementsystem zugeordnet, das jeweils mindestens eine Temperaturmesseinrichtung besitzt. Bevorzugt ist in jedem Stack für jede Zelle eine Temperaturmesseinrichtung vorgesehen. Das erfindungsgemäße Verfahren umfasst eine Reihe von Schritten. In einem Schritt wird der Wert eines Ladestroms für jeden der Batteriestacks mit Hilfe einer Kennlinie ermittelt. Zudem wird bei jedem Batteriestack mindestens ein aktueller Temperaturwert erfasst. Abhängig von dem mindestens einen erfassten Temperaturwert wird ein maximal zulässiger Ladestrom von dem erfassten Wert für die Temperatur von jedem Batteriestack bestimmt. Ausgehend von dem aktuellen Wert des Ladestroms und dem temperaturabhängigen maximal zulässigen Wert des Ladestroms, wird der kleinere Wert von Ladestrom und maximal zulässigem Ladestrom als Stackladestrom für jeden Batteriestack bestimmt. Aus den jeweils für die Batteriestacks bestimmten Stackladeströmen wird in einem nachfolgenden Schritt der kleinste Wert ausgewertet und als Batterieladestom an ein externes Ladegerät übermittelt und von diesem an die Batterie angelegt, wobei der kleinste Wert der Stackladeströme mit der Anzahl der Stacks zur Bestimmung des Batterieladestroms multipliziert wird. Das erfindungsgemäße Ladeverfahren nutzt die insbesondere bei Lithium-Ionen-Batterien vorliegende starke Temperaturabhängigkeit innerhalb des Batteriestacks, um einen maximal zulässigen Ladestrom zu ermitteln. Durch die Auswahl, stets den kleineren Ladestrom auch an der Batterie anzulegen, wird bei dem erfindungsgemäßen Verfahren sichergestellt, dass die Batterie nicht überlastet wird.

In einer bevorzugten Ausgestaltung weist die Batterie eine übergeordnete Steuereinheit auf, die mit jedem Batteriemanagementsystem der Batteriestacks für einen Datenaustausch in Verbindung steht, wobei die übergeordnete Steuereinheit den Batterieladestrom ermittelt und an das Ladegerät übermittelt. Die Verwendung einer übergeordneten Steuereinheit, die die vorliegenden Daten der Batteriemanagementsysteme sammelt, vereinfacht den Datenaustausch mit dem externen Ladegerät.

In einer bevorzugten Ausgestaltung wird in einem Batteriestack für jede Batteriezelle die Temperatur erfasst und daraus eine minimale und eine maximale Zelltemperatur bestimmt. Der maximal zulässige Ladestrom wird dann, abhängig von der minimalen und der maximalen Zelltemperatur, bestimmt. Bei der vorliegenden Ausgestaltung wird der maximal zulässige Ladestrom also abhängig von zwei Parametern bestimmt, wobei der eine Parameter die geringste erfasste Zelltemperatur und der andere Parameter die maximal erfasste Zelltemperatur in einem Batteriestack ist.

In einer bevorzugten Ausgestaltung ist jedes Batteriemanagementsystem zusätzlich zu der mindestens einen Temperaturmesseinrichtung mit mindestens einer Spannungsmesseinrichtung ausgestattet, die einen aktuellen Wert für die Stackspannung erfasst. Gemeinsam mit der erfassten Temperatur liegen dem Batteriemanagementsystem somit aktuelle Spannungswerte und Temperaturwerte vor.

In einer bevorzugten Ausgestaltung wird der Wert für den Ladestrom, abhängig von der Stackspannung ermittelt. Bevorzugt wird hierfür eine Kennlinie verwendet, die den aktuellen Wert für den Ladestrom in Abhängigkeit von der Stackspannung angibt.

In einer bevorzugten Weiterbildung wird der maximal zulässige Ladestrom über eine Kennlinie ermittelt, die abhängig von der erfassten Temperatur ist. In der Ausgestaltung, in der eine minimale und eine maximale Zelltemperatur bestimmt werden, wird der maximal zulässige Ladestrom, abhängig von dem Ladezustand des Batteriestacks und den Temperaturwerten, beispielsweise mit einem drei-parametrigen Kennfeld, bestimmt. Für eine genauere Ermittlung des maximal zulässigen Ladestroms wird bevorzugt der Ladezustand für jeden Batteriestack ermittelt und bei der Bestimmung des maximal zulässigen Ladestroms berücksichtigt.

In einer bevorzugten Ausgestaltung wird in einer Ladephase über ein externes Ladegerät der ermittelte Batterieladestrom an die zu ladende Batterie angelegt. Bevorzugt wird anschließend in eine Nachladephase umgeschaltet, wenn ein vorbestimmter Spannungswert für die Batterie erreicht wurde. In der Nachladephase wird mit einer konstanten Spannung geladen, wobei der Batterieladestrom reduziert wird, bis ein Abschaltwert erreicht wurde.

Eine bevorzugte Ausgestaltung des erfindungsgemäßen Verfahrens wird nachfolgend an einem Beispiel erläutert.

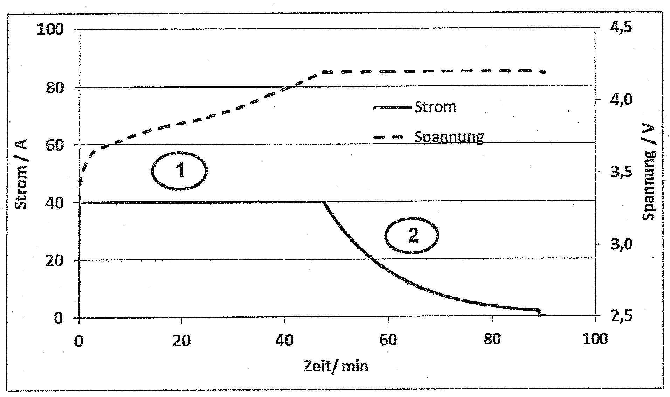

Die einzige Figur zeigt den Strom- und Spannungsverlauf über der Zeit beim Laden einer Batterie. In dem Diagramm ist eine Ladephase 1 zu erkennen, die ungefähr 50 Minuten dauert. In der Ladephase 1 wird die Batterie mit einem konstanten Strom von 40 Ampere geladen. In dieser Zeit steigt die Spannung auf einen Wert von etwas oberhalb von 4 Volt an. In der nachfolgenden Nachladephase wird der Strom bei gleichbleibender Spannung reduziert, bis ein minimaler Abschaltstrom ungefähr nach 90 Minuten erreicht und der Ladevorgang beendet ist.

Während des Ladevorgangs erfassen die Batteriemanagementsysteme in regelmäßigen Zeitabständen von beispielsweise 20 Millisekunden die Spannungen und Temperaturen der Einzelzellen des Stacks und den Strom des gesamten Stacks sowie einen berechneten Ladezustand für den gesamten Stack. Die von den Batteriemanagementsystemen erfassten Werte für die einzelnen Zellen können beispielsweise durch Mittelwertbildung oder Auswahl eines Min-/Max-Wertes in Werte für den Stack umgerechnet werden. Der Ladezustand des Stacks kann in an sich bekannter Weise durch Aufintegration des Ladestroms über die Zeit bestimmt werden. Bei dem erfindungsgemäßen Verfahren wird mit den Messdaten folgendes Verfahren ausgeführt:
1. Für jeden Stack wird der Ladestrom I_{L} gemäß einer festgelegten Ladekennlinie, abhängig von einer Spannung des Stacks bestimmt. Je nach Schaltung der Zellen ergibt sich die Stackspannung aus den Spannungen der Einzelzellen.
2. In einem nachfolgenden Schritt wird für jeden Stack der maximal zulässige Ladestrom I_{T} ausgelesen. Hierzu ist eine Kennlinienschar vorgegeben, die den maximal zulässigen Ladestrom, abhängig von der Temperatur und dem Ladezustand des Stacks, angibt. In diesem Schritt werden die maximal zulässigen Ladeströme I_{T,1} bis I_{T,n} für die Stacks 1, ..., n berechnet.
3. In einem nachfolgenden Verfahrensschritt wird für jeden Stack der maximal zulässige Ladestrom I_{T,i} mit dem Ladestrom I_{L,i} aus der Kennlinie verglichen und der kleinere Ladestrom als Stackladestrom I_{Soll,i} bestimmt (I_{Soll,i} = min (I_{L,1}, T_{T,i})). Auf diese Weise werden die Stackladeströme I_{Soll,1} bis I_{Soll,n} für die Stacks 1, ..., n bestimmt.
4. In einem nachfolgenden Schritt wird aus den vorliegenden Stackladeströmen I_{Soll,i} für die Stacks der kleinste Strom bestimmt und als neuer Batterieladestrom I_{Soll,bat} über die übergeordnete Steuereinheit an das externe Ladegerät weitergeleitet (I_{Soll,bat} = min (I_{Soll,1}, ... I_{Soll,n})). Das Ladegerät stellt diesen neuen Batterieladestrom I_{Soll,bat} ein.

Der Vorteil des neuen Sollstroms I_{Soll,bat} ist, dass keiner der Batteriestacks mit einem zu großen Sollstrom beaufschlagt wird.

## Patentansprüche

1. Verfahren zum Laden einer Batterie, die mehrere Batteriestacks aufweist, von denen jeder mehrere Batteriezellen und ein Batteriemanagementsystem besitzt, wobei die Batteriemanagementsysteme jeweils mindestens eine Temperaturmesseinrichtung aufweisen und mit einem Ladegerät für die Batterie verbunden sind:
- Ermitteln eines Werts eines Ladestroms (I_{L,i}) aus einer Kennlinie für jeden Batteriestack,
- Erfassen mindestens eines aktuellen Werts einer Temperatur für jeden Batteriestack,
- Bestimmen eines maximal zulässigen Ladestroms (I_{T,i}, abhängig von dem mindestens einen erfassten Temperaturwert für jeden Batteriestack,
- Bestimmen des kleineren Werts von Ladestrom (I_{L,i}) und maximal zulässigem Ladestrom (I_{T,i}) als Stackladestrom (I_{Soll,i}) für jeden Batteriestack,
- Bestimmen des kleinsten Stackladestroms (I_{Soll,i}) von allen Batteriestacks mit der Anzahl der Stacks multipliziert als Batterieladestrom (I_{Soll,bat}) und
- Übermitteln des Batterieladestroms (I_{Soll,bat}) an das Ladegerät.

2. Verfahren nach Anspruch 1, **dadurch gekennzeichnet, dass** die Batterie eine übergeordnete Steuereinheit aufweist, mit der die Batteriemanagementsysteme der Batteriestacks für einen Datenaustausch in Verbindung stehen, wobei die übergeordnete Steuereinheit den Batterieladestrom (I_{Soll,bat}) ermittelt und an das Ladegerät übermittelt.

3. Verfahren nach Anspruch 1 oder 2, **dadurch gekennzeichnet, dass** die Temperatur für jede Batteriezelle eines Batteriestacks erfasst wird und daraus die minimale und die maximale Zelltemperatur (Tₘᵢₙ und Tₘₐₓ) bestimmt wird, wobei der maximal zulässige Ladestrom abhängig von der minimalen und der maximalen Zelltemperatur bestimmt wird.

4. Verfahren nach Anspruch 1 oder 2, **dadurch gekennzeichnet, dass** jedes Batteriemanagementsystem mindestens eine Spannungsmesseinrichtung aufweist, die einen aktuellen Wert für die Stackspannung erfasst.

5. Verfahren nach Anspruch 4, **dadurch gekennzeichnet, dass** der Wert für den Ladestrom (I_{T,1}), abhängig von der Stackspannung, ermittelt wird.

6. Verfahren nach Anspruch 5, **dadurch gekennzeichnet, dass** der Wert für den Ladestrom über eine Kennlinie, abhängig von der Stackspannung, ermittelt wird.

7. Verfahren nach einem der Ansprüche 1 bis 6, **dadurch gekennzeichnet, dass** der maximal zulässige Ladestrom (I_{T,i}) über eine Kennlinie, abhängig von mindestens einer erfassten Temperatur, ermittelt wird.

8. Verfahren nach einem der Ansprüche 1 bis 7, **gekennzeichnet durch**
- Ermitteln des Ladezustands jedes Batteriestacks.

9. Verfahren nach Anspruch 8, **dadurch gekennzeichnet, dass** der maximal zulässige Ladestrom (I_{T,i}) zusätzlich abhängig von dem Ladezustand des Batteriestacks ermittelt wird.

10. Verfahren nach einem der Ansprüche 1 bis 9, **dadurch gekennzeichnet, dass** in einer Ladephase der Batterieladestrom an die zu ladende Batterie angelegt wird.

11. Verfahren nach einem der Ansprüche 1 bis 10, **dadurch gekennzeichnet, dass** in ein Nachladephase umgeschaltet wird, wenn ein vorbestimmter Spannungswert für die Batterie erreicht wurde.

12. Verfahren nach Anspruch 11, **dadurch gekennzeichnet, dass** in der Nachladephase mit konstanter Spannung geladen wird, wobei der Batterieladestrom reduziert wird, bis ein Abschaltwert erreicht wurde.

## Claims

1. A method of charging a battery which has several battery stacks, from which each one has several battery cells and a battery management system, wherein the battery management systems have each at least one temperature measurement device and are connected to a charger for the battery:
• finding out a value of a charging current (I_{L,i})from a characteristic curve for each battery stack,
• capturing at least one actual value of a temperature for each battery stack,
• determining a maximum admissible charging current (I_{T,i}) depending on the at least one captured temperature value for each battery stack,
• determining the smaller value of charging current (I_{L,i}) and maximum admissible charging current (I_{T,i}) as stack charging current (I_{Soll,i}) for each battery stack,,
• determining the smallest stack charging current (I_{Soll,i}) of all battery stacks, multiplied by the number of stacks, as battery charging current (I_{Soll,bat}) and
• transmitting the battery charging current (I_{Soll,bat}) to the charger.

2. The method according to claim 1, **characterised in that** the battery has a higher-level control unit, to which the battery management systems of the battery stacks are connected for data transfer, wherein the higher-level control unit finds out the battery charging current (I_{soll,bat}) and transmits it to the charger.

3. A method according to claim 1 or 2, **characterised in that** the temperature is captured for each battery cell of a battery stack and the minimum and the maximum cell temperature (Tₘᵢₙ and Tₘₐₓ) are determined from this, wherein the maximum admissible charging current is determined depending on the minimum and the maximum cell temperature.

4. A method according to claim 1 or 2, **characterised in that** that each battery management system has at least one voltage measurement device which captures an actual value for the stack voltage.

5. The method according to claim 4, **characterised in that** the value for the charging current (I_{T,1}) is determined depending on the stack voltage.

6. The method according to claim 5, **characterised in that** the value for the charging current (I_{T,1}) is determined depending on the stack voltage via a characteristic curve.

7. A method according to any one of the claims 1 to 6, **characterised in that** the maximum admissible charging current (I_{T,i}) is determined depending on the at least one captured temperature via a characteristic curve.

8. A method according to any one of the claims 1 to 7, **characterised by**
• determining the state of charge of each battery stack.

9. The method according to claim 8, **characterised in that** the maximum admissible charging current (I_{T,i}) is in addition determined depending on the state of charge of the battery stack.

10. A method according to any one of the claims 1 to 9, **characterised in that** the battery charging current is applied to the battery to be charged in a charging phase.

11. A method according to any one of the claims 1 to 10, **characterised in that** it is switched to a recharging phase when a predetermined voltage value has been reached for the battery.

12. The method according to claim 11, **characterised in that** it is charged with constant voltage in the recharging phase, wherein the battery charging current is reduced until a cut-off value has been reached.

## Revendications

1. Procédé de charge d'une batterie qui a plusieurs empilements de batterie, dont chacun comporte plusieurs cellules de batterie et un système de gestion de batterie, les systèmes de gestion de batterie ayant chacun au moins un dispositif de mesure de température et étant reliés à un chargeur pour la batterie:
• établir une valeur d'un courant de charge (I_{L,i}) à partir d'une courbe caractéristique pour chaque empilement de batterie,
• saisir au moins une valeur actuelle d'une température pour chaque empilement de batterie,
• déterminer un courant de charge (I_{T,i}) maximalement admissible en fonction de l'au moins une valeur de température établie pour chaque empilement de batterie,
• déterminer la valeur plus petite du courant de charge (I_{L,i}) et du courant de charge (I_{T,i}) maximalement admissible comme courant de charge d'empilement (I_{Soll,i}) pour chaque empilement de batterie,
• déterminer le courant de charge d'empilement (I_{soll,i}) le plus petit de tous les empilements de batterie, multiplié par le nombre des empilements, comme courant de charge de batterie (I_{Soll,bat}), et
• transmettre le courant de charge de batterie (I_{Soll,bat}) au chargeur.

2. Procédé selon la revendication 1, **caractérisé en ce que** la batterie a une unité de contrôle de niveau supérieur, à laquelle les systèmes de gestion de batterie des empilements de batterie sont reliés pour transfert de données, l'unité de contrôle de niveau supérieur établissant le courant de charge de batterie (I_{Soll,bat}) et le transmettant au chargeur.

3. Procédé selon la revendication 1 ou 2, **caractérisé en ce que** la température est saisie pour chaque cellule de batterie d'un empilement de batterie, et que les températures de cellule minimale et maximale (Tₘᵢₙ et Tₘₐₓ) sont déterminées à partir de celles-ci, le maximalement admissible courant de charge étant déterminé en fonction des températures de cellule minimale et maximale.

4. Procédé selon la revendication 1 ou 2, **caractérisé en ce que** chaque système de gestion de batterie comporte au moins un dispositif de mesure de tension qui saisit une valeur actuelle pour la tension d'empilement.

5. Procédé selon la revendication 4, **caractérisé en ce que** la valeur pour le courant de charge (I_{T,1}) est déterminée en fonction de la tension d'empilement.

6. Procédé selon la revendication 5, **caractérisé en ce que** la valeur pour le courant de charge est déterminée en fonction de la tension d'empilement via une courbe caractéristique.

7. Procédé selon l'une quelconque des revendications 1 à 6, **caractérisé en ce que** le courant de charge maximalement admissible (I_{T,i}) est déterminé en fonction de l'au moins une température saisie via une courbe caractéristique.

8. Procédé selon l'une quelconque des revendications 1 à 7, **caractérisé par**
• déterminer le niveau de charge de chaque empilement de batterie.

9. Procédé selon la revendication 8, **caractérisé en ce que** le courant de charge maximalement admissible (I_{T,i}) est en outre déterminé en fonction du niveau de charge de l'empilement de batterie.

10. Procédé selon l'une quelconque des revendications 1 à 9, **caractérisé en ce que** le courant de charge de batterie est appliqué à la batterie à charger dans une phase de chargement.

11. Procédé selon l'une quelconque des revendications 1 à 10, **caractérisé en ce qu'**il est commuté vers une phase de rechargement quand une valeur prédéterminée de la tension de la batterie est achevée.

12. Procédé selon la revendication 11, **caractérisé en ce qu'**il est chargé avec tension constante dans la phase de rechargement, le courant de charge de la batterie étant réduit jusqu'au moment qu'une valeur de coupure était atteinte.
